# EUROPEAN PATENT APPLICATION

(11) **EP 4 751 927 A1**
(43) Date of publication of application: **03.06.2026**
(21) Application number: 24216520.7
(22) Date of filing: 29.11.2024
(51) Int. Cl.: B60B 27/06, B25B 13/48, F16B 23/00, F16B 41/00

(54) **SCREW, KEY AND VEHICLE WHEEL**

(71) Applicant: Volvo Car Corporation, 405 31 Göteborg (SE)
(72) Inventor: NORDELL, Magnus, 40531 Göteborg (SE); ANDERSSON, Carl-Johan, 40531 Göteborg (SE)
(74) Representative: Kransell & Wennborg KB

(57) **Abstract**

A screw (100) for a vehicle wheel (10), comprising a threaded portion (110) and a head portion (120) comprising a first lock segment (130) with a first lock pattern (131) and a second lock segment (140) with a second lock pattern (141), wherein the second lock pattern is configured for torque transfer from the head portion to the threaded portion when engaged with a matching second key pattern (241) of a key (200), and wherein the first lock segment at least partially obstructs access to the second lock segment such that the second lock segment cannot be engaged by the key without engagement of the first lock pattern by a matching first key pattern (231) of the key.

The invention further relates to a key (200) for a screw (100), a vehicle wheel (10) and a set of screw (100), key (200) and/or vehicle wheel (10).

## Description

### TECHNICAL FIELD

The present disclosure relates to a screw for a vehicle wheel, a key for a screw, a vehicle wheel and various sets of screw, key and/or vehicle wheel.

### BACKGROUND

A trend for bigger and more expensive vehicles wheels has led to an increased number of thefts of vehicle wheels. In this regard, lockable wheel screws are a common solution to prevent theft of vehicle wheels. The lockable wheel screws have a unique socket pattern that fits to a specific socket. However, it has been observed that the limited numbers of combinations and actual design does not effectively prevent vehicle wheel thefts. One reason is that, over time, thieves gain access to the specific sockets. Another reason is that thieves force another socket into place and by that remove the lockable wheel screws.

### SUMMARY

The problem is at least partially solved or alleviated by the subject matter of the independent claims of the present disclosure, wherein further examples are incorporated in the dependent claims.

According to a first aspect, there is provided a screw for a vehicle wheel. The screw comprises a threaded portion to be screwed into a thread of a wheel hub through a recess in the vehicle wheel, and a head portion comprising a first lock segment with a first lock pattern and a second lock segment with a second lock pattern. The second lock pattern is configured for torque transfer from the head portion to the threaded portion when engaged with a matching second key pattern of a key. The first lock segment at least partially obstructs access to the second lock segment such that the second lock segment cannot be engaged by the key without engagement of the first lock pattern by a matching first key pattern of the key.

Hence, the disclosure provides for an improved screw or wheel screw, which features two lock segments with lock patterns to prevent theft of vehicle wheels secured by one or SE:AFE more of these screws. In this design with two lock segments, it is important that the screw is designed such that the first lock segment at least partially obstructs access to the second lock segment. The second lock segment is the one required to be engaged by the corresponding or matching key to transfer torque onto the threaded portion and thereby release the threaded portion of the screw from the thread of the wheel hub. Hence, without having a matching key, it is not possible to pass the first lock segment, which obstructs the second lock segment from being engaged by a corresponding second key segment of a matching key. Accordingly, the screw cannot be engaged in a torque transferring manner to release it from the wheel hub behind the vehicle wheel or rim.

The screw may generally be made from any material but in particular be made from any metal. The threaded portion and the head portion indicate different portions or parts of the screw. The threaded portion may be provided on a shaft part of the screw with an outer thread to interlock with a corresponding thread inside a hole of the wheel hub. The head portion on the other hand may be provided on a face or end of the shaft part to be engageable by the key. Consequently, that head portion comprises the two lock segments with their lock patterns. The two lock patterns are provided at different segments or parts of the head portion, namely the first lock segment and the second lock segment. Otherwise, the two lock patterns may be the same or different from one another, i.e., they may comprise a different lock pattern. Lock pattern herein means that this pattern is used or can be associated with a lock, where the pattern is specific to a matching key or its key pattern, thereby preventing that anyone can engage the lock pattern. The lock pattern may be an uncommon or unique pattern with respect to common tools or patterns. This prevents the lock patterns from being engaged by common matching keys or generally means such as common hexagon socket wrenches. Key pattern correspondingly herein means that this pattern is used or can be associated with the lock to open it similar to a key opening a lock.

The second lock pattern being configured for torque transfer from the head portion to the threaded portion when engaged with or by the matching second key pattern of the key means that when the second lock pattern is correctly engaged with the matching or fitting key, a wrench or any other tool having the key connected thereto may be turned or otherwise actuated to transfer a torque onto the head portion. This torque will in turn be transferred from the head portion to the threaded portion such that the screw can be loosened from the thread of the wheel hub in which it may be secured. To provide the configuration of the torque transfer capability of the second lock pattern, the second lock segment with its second lock pattern may be fixedly connected to the threaded portion. Thereby, the torque applied onto the second lock segment will be fixedly transferred to the threaded portion in effect rotating the screw inside the wheel hub.

The first lock segment at least partially obstructing access to the second lock segment prevents the second lock segment, which is enabled for torque transfer as described herein, from being accessed by a key which does not have a segment matching the first lock segment or pattern. This effectively prevents that a thief can force another socket into place and by that remove the screw from the vehicle wheel. For obstructing the second lock segment, the first lock segment may be arranged before the second lock segment in a direction of longitudinal extension of the screw from the head portion or a face thereof to the threaded portion. In particular, the first lock pattern may at least partially intersect with the second lock pattern at or through a plane of the first lock pattern when view from atop or the face of the head portion. In other words, when looking atop the head portion or onto the face and down the screw, the first lock segment with its first lock pattern may be obstructing or blocking the view onto a part or the entirety of the second lock pattern of the second lock segment. Alternatively, or additionally, both lock segments may be extending at least partially in parallel to one another. Accordingly, the first lock segment may need to be engaged in parallel to the second lock segment and not first and then followed by the engaging of the second lock segment.

According to an example, the first lock segment may be torque decoupled from the threaded portion such that torque for rotating the threaded portion cannot be transferred from the first lock segment to the threaded portion. This is the opposite of the design of the second lock pattern being configured for torque transfer from the head portion to the threaded portion when engaged with the matching second key pattern of the key. By torque decoupling, meaning that no torque can be transferred from the head portion to the threaded portion via the first lock segment, it is further prevented that a thief can force a socket onto the first lock segment to loosen the screw. Specifically, if a thief would force a socket onto the first lock segment, which may be arranged before the second lock segment in the direction described above, they could not rotate the threaded portion and thus not untighten the screw to steal the vehicle wheel.

In an example, the first lock segment may be configured rotatable with respect to the threaded portion. Thereby, the first lock segment may be effectively torque decoupled from the threaded portion. For the rotatable configuration, the first lock segment may for example be provided on or as a sleeve. The sleeve may be attached in a rotatable manner around a shaft of the screw at the head portion. Thereby, the sleeve with the first lock pattern can rotate around the shaft of the screw. When the sleeve with the first lock pattern is engaged by a non-matching key or tool, it is not possible to transmit a torque via the sleeve to the threaded portion. For the rotatable coupling of the first lock segment to the threaded portion, a pivot bearing or similar may be used, in particular between the sleeve and the shaft. The rotatable coupling and the pivot bearing are to be understood as non-limiting examples of a possible torque decoupling mechanism. For example, a linear or sliding coupling or mechanism with the first locking segment sliding relative to the threaded portion or a segment of the head portion may alternatively be employed.

In an example, the first lock segment may axially extend in length from a face of the head portion to the second lock segment. Axially in particular refers to an axial extension or axis, more particularly a longitudinal axis of the screw. Accordingly, the first lock segment may have a longitudinal extension in that axial direction from the face of the head portion to the second lock segment. The first lock segment may comprise the first lock pattern distributed along the axial extension of the first lock segment or comprise the first lock pattern on a single plane transverse or perpendicular to the axial extension of the first lock segment.

In an example, the first lock pattern may comprise one or more radially extending locking features. The second lock pattern may comprise one or more axially extending locking features and/or one or more radially extending locking features. The locking features may generally be in the form of indents or notches extending axially or radially inside the respective segment or a surface thereof. Additionally, or alternatively, the locking features may generally be in the form of teeth or protrusions extending axially or radially outwards of the respective segment or a surface thereof. Radially extending in that regard in particular means that the longitudinal extension of the locking features is traverse or perpendicular to the longitudinal or axial extension of the screw. Axially extending in that regard in particular means that the longitudinal extension of the locking features is in parallel to the longitudinal or axial extension of the screw.

In an example, the head portion may comprise an outer skirt surrounding or comprising the first lock segment. The outer skirt may be configured outwardly deflectable upon engagement of the head portion by a key (or, in other words, socket) without a first key pattern matching the first lock pattern. In other or additional words, the outer skirt may be flexible in that it can be deflected or deformed when subjected to a force pushing the outer skirt outwards, e.g., when a thief forces a socket onto the first lock segment and the socket deforms the outer skirt. By having a flexible outer skirt on the head portion, the outer skirt can interlock with a structure on the rim of the vehicle wheel, e.g., the recessed portion, in particular but not only when it has an inwardly projected segment as later described herein. Thereby, it may become impossible or more difficult to remove the screw without a forced socket or generally without a matching key or at all after such attempt. Also, a deflected outer skirt may signal to the owner of the vehicle that there has been an attempt to steal the vehicle wheel. The outer skirt may for example be fixedly attached to the head portion or generally the screw. Alternatively, the outer skirt may for example be rotatably attached to the head portion or generally the screw, e.g., similar to the first lock segment. For example, a pivot bearing may be used similar to the first lock segment. The rotatable attachment means that the outer skirt can be rotated around the head portion or generally the screw. This can prevent that the outer skirt can be engaged to transfer torque to the threaded portion.

In an example, the second lock segment may comprise an angled surface between the second lock pattern and the outer skirt. If a socket or unmatching key is forced onto the second lock segment, the angled surface can force the socket onto the outer skirt, thereby deflecting or deforming it outwards and engaging it with the rim of the vehicle wheel to prevent a theft of the vehicle wheel. The angled surface may in particular be angled, sloped or inclined downwards from the second lock pattern towards the outer skirt. Additionally, or alternatively, the outer skirt on an outer side thereof may comprises one or more protruding elements. These protruding elements may protrude outwards from the outer side. For example, these protruding elements may be in the form of notches or similar. The protruding elements may in particular be configured to engage with the recessed portion of the rim comprising the recess into which the screw is inserted. Thereby, even if there should be some torque applied onto the screw, the protruding elements can engage the rim inside the recessed portion and limit the transmitted torque, making it more difficult or preventing the screw from being untightened.

According to a second aspect, there is provided a key for a screw for a vehicle wheel, wherein the key is configured to engage a head portion of the screw. The key comprises a first key segment with a first key pattern and a second key segment with a second key pattern, wherein the second key pattern is configured for torque transfer from the head portion to a threaded portion of the screw when engaged with a matching second lock pattern of the screw. The first key segment at least partially obstructs access to the second key segment such that the second key portion cannot be engaged without engagement of the first key pattern by a matching first lock pattern of the screw.

Accordingly, a key with a design matching the herein described screw is provided to securely and without damage to the screw engage the screw and untighten or tighten it with respect to the vehicle wheel and wheel hub. In this design with two key segments, it is important that the key is designed such that the first key segment at least partially obstructs access to the second lock segment. The second key segment is the one required to be engaged by the screw to transfer torque onto the threaded portion and thereby release the threaded portion of the screw from the thread of the wheel hub. Hence, without having a matching screw, it is not possible to pass the first key segment, which obstructs the second key segment from being engaged by a corresponding second lock segment of a matching screw.

The key may generally be made from any material but in particular be made from any metal. The key may in particular but not limited thereto be in the form of a socket or nut that is to be placed or put on the head portion of the screw. The key may comprise a head portion, which may be similar to the screw in that this head portion can be engaged by another element or device, specifically a tool. For example, the head portion may comprise a hexagonal shape to be engaged by a tool (e.g., a torque wrench) having a corresponding hexagonal socket to engage the head portion. Also, the key may comprise a shaft portion. This shaft portion may comprise the two key segments with their key patterns. The two key patterns may be the same or different from one another, i.e., they may comprise a different key pattern. Key pattern herein means that this pattern is used or can be associated with a key, where the pattern is specific to a matching lock or its lock pattern, thereby preventing that anyone can engage the lock pattern who does not have or use the key pattern. The key pattern may be an uncommon or unique pattern with respect to common tools or patterns. This prevents the lock patterns from being engaged by common matching keys or generally means such as common hexagon socket wrenches. The first key pattern may match the first lock pattern, and the second key pattern may match the second lock pattern.

The second key pattern being configured for torque transfer from the head portion to the threaded portion when engaged with or by the matching second lock pattern of the screw means that when the second lock pattern is correctly engaged with the matching or fitting key, a wrench or any other tool having the key connected thereto and which may be turned or otherwise actuated to transfer a torque onto the head portion. This torque will in turn be transferred from the head portion to the threaded portion such that the screw can be loosened from the thread of the wheel hub in which it may be secured. To provide the configuration of the torque transfer capability of the second key pattern, the second key segment with the head portion of the key may be fixedly connected to each other. Thereby, the torque applied onto the head portion will be fixedly transferred to the second key segment, from there to the head portion and threaded portion of the screw and in effect rotate the screw inside the wheel hub.

The first key segment at least partially obstructing access to the second key segment prevents the second key segment, which is enabled for torque transfer as described herein, from being accessed by a screw which does not have a segment matching the first key segment or pattern. This effectively mimics the structure of the screw with the lock segments, which prevents that a thief can force another socket into place and by that remove the screw from the vehicle wheel. For obstructing the second key segment, the first key segment may be arranged after the second key segment in a direction of longitudinal extension of the key from the head portion or a face thereof to the shaft portion. In particular, the first key pattern may at least partially intersect with the second key pattern at or through a plane of the first key pattern when view from the (bottom of the) shaft portion towards the head portion. In other words, when looking from the end of the shaft portion, specifically from an end thereof with an opening to put the shaft portion onto the head portion of the screw, the first key segment with its first key pattern may be obstructing or blocking the view onto a part or the entirety of the second key pattern of the second key segment. Alternatively, or additionally, both key segments may be extending at least partially in parallel to one another. Accordingly, the first key segment may need to be engaged in parallel to the second key segment and not first and then followed by the engaging of the second key segment.

In an example, one of the two key segments may be arranged as an insert inside the other one of the two key segments. In particular, the shaft portion of the key may be a sleeve or cylindrical portion. One of the two key segments or both of the key segments may be sleeves or cylindrical portions, in particular in the form of sockets. One of the two key segments may be inserted as a socket inside the other one, which may have the head portion arranged thereto, e.g., integrally.

In an example, the first key segment may be detachable from the second key segment. This may in particular be the case when both key segments are designed as sleeves, cylindrical portions or sockets. Thereby, first key segments and second key segments with respectively different key patterns may be manufactured and attached to one another or, in other words, coupled with one another. Depending on the number of different key patterns for each key segment, a very high number of different combinations of first key patterns with second key patterns is thereby achievable. Still, the number of required parts, i.e., key segments or sockets, is kept much lower than the achievable number of combinations, which can prevent thieves from obtaining all required key segments. Also, it may be difficult to know which installed screw at any particular vehicle requires which particular combination of different key segments even if a thief would have all key segments. Due to the potentially large number of different combinations, it would take a very long and impractical time for a thief to try all out. Only the owner, workshops or manufacturer of the vehicle or vehicle wheels may have the information on which type of screw is being used in that vehicle or which key, specifically which combination of different key segments, is needed to engage the respective screw. That information may be impossible or very difficult to acquire by a thief. But without this information, a thief may not assemble a matching key in a feasible time required to steal the vehicle wheel. For example, there may be ten or more different key patterns for the first key segment and twenty or more different key patterns for the second key segment. Correspondingly, there can be two-hundred or more different combinations of key patterns in a key and a corresponding screw may require exactly one out of these two hundred.

In an example, the first key segment may comprise a third key pattern at an axial end of the first key segment. The third key pattern may be configured for engaging with a third lock pattern of the screw for torque transfer from the head portion to the threaded portion of the screw. The third lock pattern of the screw may for example be provided on or as part of the second lock segment. Accordingly, there may be a first key pattern that may not be used for torque transfer due to the described possibility of a torque decoupling. Still, the first key segment may comprise a third key pattern for torque transfer, which further adds complexity to the engaging mechanism of keys and makes it more difficult for thieves to untighten a screw. The third key pattern may be located at an axial end of the first key segment and, for example, comprise axially extending key features. The first key pattern on the other hand may primarily or only comprise radially extending key features. The second key pattern may also comprise axially extending key features. Generally, the key features may be corresponding to the locking features discussed herein. Specifically, the key features may have the same shape or form as the locking features described herein and be relatively complementary to each other. Accordingly, when a key feature is a protrusion or tooth, the locking feature may be a correspondingly sized and/or shaped indent or notch, for example.

According to a third aspect, there is provided a vehicle wheel. The vehicle wheel comprises a recessed portion with a recess for inserting a screw therethrough, wherein the recessed portion comprises an inwardly projected segment arranged at a screw input side of the recessed portion. The inwardly projected segment projects inwardly towards the recess and the inwardly projected segment is configured as a limit stop for an outwardly deflected outer skirt of a screw for retaining the screw inside the recess.

Such vehicle wheel, in particular in the form of a vehicle rim or comprise a vehicle rim or simply rim, may advantageously block a screw from being untightened or released out of the recess. The screw may be tightened behind the vehicle wheel in a recess or thread of a wheel hub, which may in turn be attached to the vehicle, specifically a vehicle suspension. In inwardly projected segment is located at the screw input side of the recessed portion, which may be at the (visible) face or front of the rim or wheel when attached to the vehicle. Thereby, when trying to pull out the screw, a part of the screw, in particular an outwardly deflected or deformed outer skirt as described herein, may strike or hit the limit stop in the form of the inwardly projected segment, preventing the screw from being pulled out. The inwardly projected segment may in that regard be projected in a direction opposite to the outward deflection or deformation of the outer skirt. Generally, the inwardly projected segment may be seen as a portion or part of the rim, which projects inwardly into or inside the recess or, in other words, towards the screw when inserted therethrough. The recessed portion may have a smaller diameter at the inwardly projected segment at the screw input side than at a segment of the rim next or adjacent to the inwardly projected segment. Specifically, the inwardly projected segment may taper or narrow down the recess, thus forming the limit stop. For example, the limit stop may be formed as a step in the recessed portion or recess of the rim.

According to a fourth aspect, there is provided a set comprising at least one screw according to the first aspect and at least one key according to the second aspect. The respective lock patterns and key patterns of the at least one screw and the at least one key may be matching one another. Also, the set may comprise more than one screw and/or more than one key with different lock patterns and/or key patterns.

According to a fifth aspect, there is provided another set comprising at least one screw according to the first aspect, in particular a screw having the outer skirt as described herein, and the vehicle wheel according to the third aspect. This set may comprise at least one key according to the second aspect.

It is noted that the above examples may be combined with each other irrespective of the aspect involved. Accordingly, the screw may be combined with corresponding features of the key and, likewise, the key may be combined with corresponding features of the screw. The same is true for the vehicle wheel, which may be combined with corresponding features of the screw or key or both and the other way around.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective partial view of a vehicle wheel;
- Figure 2: shows a cross-sectional view of a screw for the vehicle wheel of Fig. 1;
- Figure 3: shows a top view of the screw of Fig. 2;
- Figure 4: shows a cross-sectional view of an alternative screw for the vehicle wheel of Fig. 1;
- Figure 5: shows a cross-sectional view of yet another alternative screw for the vehicle wheel of Fig. 1;
- Figure 6: shows a partially cross-sectional view of a key for the screw of Figs. 2 and 3;
- Figure 7: shows a schematic view onto an interlocking of key patterns and lock patterns of the key of Fig. 6 and the screw of Figs. 2 and 3.

### DETAILED DESCRIPTION

The Figures are merely schematic representations and serve only to illustrate examples of the disclosure. Identical or equivalent elements are in principle provided with the same reference signs.

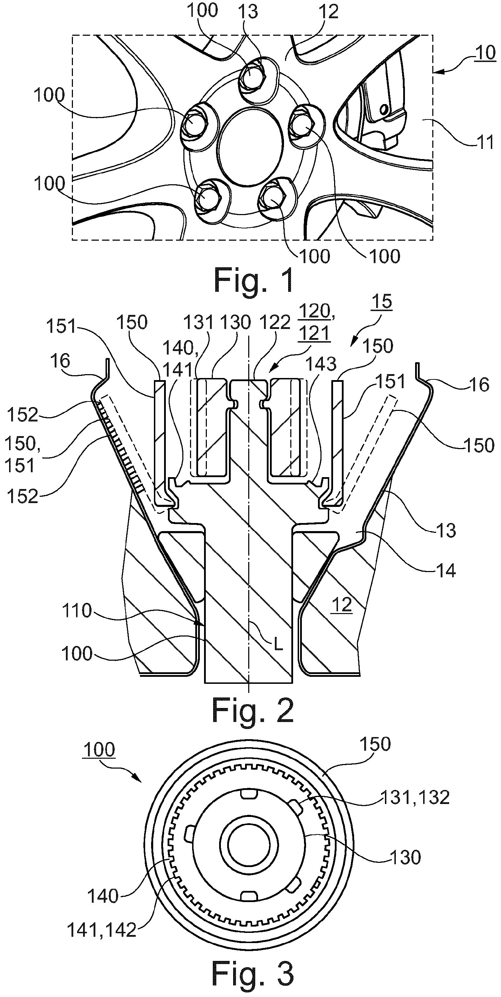

Fig. 1 shows a vehicle wheel 10. The vehicle wheel 10 exemplary comprises a tire 11 and a rim 12, the tire 11 being secured on the rim 12. Screws 100 are securing the rim 12 to a wheel hub (not shown) located behind the vehicle wheel 10. Specifically, the wheel hub may comprise several recesses and/or threads, in particular inside the recesses, for receiving the screws 100 and interlocking therewith, specifically with threads on the screws 100.

The rim 12 comprises several recessed portions 13 with recesses 14 (see Fig. 2), through with the screws 100 are inserted. Exemplary, the rim 12 comprises five recessed portions 13 to receive five screws 100 to secure the vehicle wheel 10 to the vehicle. It is noted that the screws 100 shown in Fig. 1 are simplified and that the screws 100 may have the configuration as shown and explained further with regard to Figs. 2 to 5.

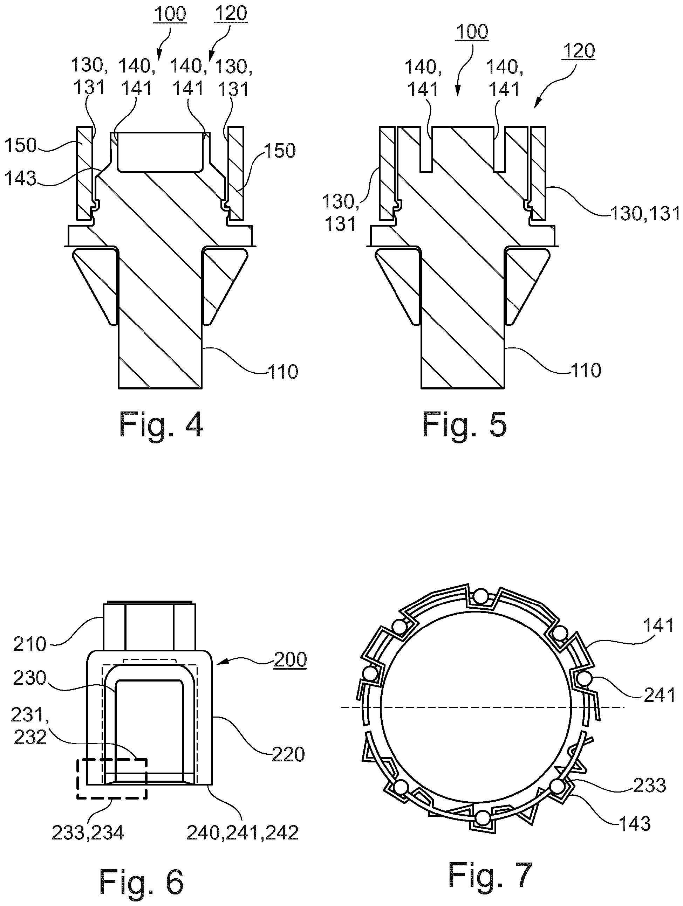

Fig. 2 shows an exemplary screw 100. The screw 100 comprises a threaded portion 110 that comprises an (outer) thread to be screwed into the recess or thread of the wheel hub through the recess 14 in the rim 12. Also, the screw 100 comprises a head portion 120, which has a first lock segment 130 with a first lock pattern 131 and a second lock segment 140 with a second lock pattern 141. The second lock pattern 141 is fixedly arranged with respect to the threaded portion 110 such that torque is transferred from the head portion 120 to the threaded portion 110 when engaged with a matching second key pattern 241 of a key 200 (see Fig. 6).

As can be seen in the Fig. 3 showing the screw 100 in a top perspective from the head portion 120 downwards as opposed to the cross-sectional view of Fig. 2, the first lock segment 130 may at least partially obstruct access to the second lock segment 140 such that the second lock segment 140 cannot be engaged by the key 200 without passing the first lock pattern 131, for which engagement of the first lock pattern 131 by a matching first key pattern 231 of the key 200 may be required.

In the example of the screw 100 of Figs. 2 and 3, the first lock segment 130 is provided as or on a sleeve rotatably coupled to a shaft segment 122 of the head portion 120, e.g., by means of a pivot bearing. Accordingly, it is not possible to transfer torque from the first lock segment 130 or generally from the sleeve to the threaded portion 110 to untighten the screw 100 from the wheel hub and remove the vehicle wheel 10. Instead, the second lock segment 140 must be engaged by a matching second key segment 240 with a matching second key pattern 241 to be able to transfer torque via the head portion 120 of the screw 100 to the threaded portion 110 and untighten (or tighten) the screw 100.

Exemplary, as indicated in Fig. 2 and shown in Fig. 3, the first lock pattern 131 may comprise radially extending locking features 132 (extending radially outwards from the longitudinal axis L of the screw 100), whereas the second lock pattern 141 may comprise axially extending locking features 142 (extending axially in parallel to the longitudinal axis L of the screw 100).

The screw 100 may optionally comprise an outer skirt 150 as shown in Figs. 2 and 3. The outer skirt 150 or, in other words, apron, may circumferentially extend in diameter or width fully or partially around the head portion 120. In length, the outer skirt 150 may extend along the longitudinal axis L. The outer skirt 150 may comprise a funnel shape or generally be funnel-shaped. The outer skirt 150 may be surrounding the first lock segment 130 as shown in Figs. 2 and 3. Alternatively, the outer skirt 150 may be comprising the first lock segment 130 as shown in the example of the screw 100 in Fig. 4.

The outer skirt 150 may be configured outwardly deflectable or deformable upon engagement of the head portion 120 by a key or socket without a first key pattern 231 matching the first lock pattern 131. In this case, the outer skirt 150 will outwardly deflect or deform as indicated by the outer skirt 150 indicated with dashes in Fig. 2. Consequently, the outer skirt 150 may hit an inwardly projected segment 16 of the rim 12 as shown in Fig. 2 to be acting as a limit stop. The inwardly projected segment 16 may be partially or fully extending circumferentially in or on the recessed portion 13 and at a screw input side 15 of the recessed portion 13.

The outer skirt 150 may comprise one or more protruding elements 152 on an outer side 151 thereof, the outer side 151 facing the rim 12 or, in other words, the surface of the recessed portion 13. The protruding elements 152 may interlock or engage with the rim 12, additionally preventing or making it more difficult to pull out the screw 100 from the recessed portion 13 to release the vehicle wheel 10 from the vehicle.

Fig. 4 shows another example of a screw 100 in a cross-sectional view. Here, different from the screw 100 of Figs. 2 and 3, the first lock segment 130 is provided on the outer skirt 150 instead of the sleeve as described with respect to Figs. 2 and 3.

Additionally, the head portion 120 of the screw 100 of Fig. 4 comprises an angled surface 143 between the second lock pattern 141 and the outer skirt 150. The angled surface 143 lets a forced socket from a thief slide onto the outer skirt 150, thereby deforming it outwardly as explained herein to further secure the screw 100 with respect to the rim 12 to prevent theft of the vehicle wheel 10.

Another example of a screw 100 is shown in Fig. 5. The screw 100 of Fig. 5, different from the one of Figs. 2 and 3, comprises a second lock segment 140 that is arranged in parallel to the first lock segment 130. The screw 100 of Fig. 4 has a similar arrangement with the difference that the screw 100 of Fig. 5 has the second lock segment 140 extend inside a circumferential slot inside the head portion 120 rather than on an outer perimeter of the head portion 120 and next to the outer skirt 150 as in Fig. 4. This is different from the design of the screw 100 in Figs. 2 and 3, where the second lock segment 140 is located after the first lock segment 130 in the axial direction from the face 121 of the head portion 120 to the threaded portion 110.

Also, in the screws 100 of Figs. 4 and 5, the second lock patterns 141 may comprise radially extending locking features as opposed to the axially extending locking features 142 shown in the screw 100 of Figs. 2 and 3.

Fig. 6 shows a key 200 for the screw 100. The key 200 is configured to engage the head portion 120 of the screw 100. The key 200 comprises the first key segment 230 with a first key pattern 231 and the second key segment 240 with a second key pattern 241. The second key pattern 241 is configured for torque transfer from the head portion 120 of the screw 100 to the threaded portion 110 of the screw 100 when engaged with the matching second lock pattern 141 of the screw 100. The first key segment 230 at least partially obstructs access to the second key segment 240 such that the second key portion 240 cannot be engaged without engagement of the first key pattern 231 by a matching first lock pattern 131 of the screw 100.

In the example of Fig. 6, the key 200 is generally designed as a socket for a tool, e.g., a torque wrench. For this purpose, the key 200 comprises a head portion 210 to be engaged by the torque wrench. For example, the head portion 210, shown herein in a plain view, has a hexagonal outer shape. The key 200 further comprises a shaft portion 220, which is herein shown in a cross-sectional view. The shaft portion 220 comprises the two key segments 230, 240. In this example, the first key segment 230 is arranged as an insert inside the second key segment 240, which is thereby surrounding or receiving it.

The first key segment 230 may be attachable to and detachable from the second key segment 240. Different key segments 230, 240 with different key patterns 231, 241 may be provided in order to providing many different possible combinations of keys 200 and consequently manufactured screws 100 while requiring much fewer individual key patterns 231, 241 and lock patterns 131, 141 for the respective segments 130, 140, 230, 240. When combined or assembled, both segments 230, 240 form a single key or socket unit. The second key segment 240 may also be referred to as a main socket or key, whereas the first key segment 230 may be referred to as the insert socket, which may slide into the main socket.

As further seen in Fig. 6, to match the screw 100 with the key 200, specifically to match the lock segments 130, 140 with the key segments 230, 240, the key 200 is provided with radially extending key features 232 on the first key pattern 231 of the first key segment 230. Also, the key 200 is provided with axially extending key features 242 on the second key pattern 241 of the second key segment 240.

Additionally, as indicated in Fig. 6, the first key segment 230 may further comprise a third key pattern 233 at an axial end 234 of the first key segment 230. This third key pattern 233 may be matching a corresponding third lock pattern 143 on the second lock segment 130 and second lock pattern 131 as shown in Fig. 2. The matching between the additional third key pattern 233 and the third lock pattern 143 may be required to securely or sufficiently engage the key 200 with the screw 100 for torque transfer, thereby providing an additional anti-theft feature.

Correspondingly, Fig. 7 schematically shows how the respective second key pattern 241 and second lock pattern 141 engage with one another, and the third key pattern 233 and the third lock pattern 143 engage with one another to transfer torque from the key 200 to the screw 100, specifically to the threaded portion 110. In this example, the second lock pattern 141 and the third lock pattern 143 are both arranged on the same trajectory, herein exemplary circular or generally round, on the second lock segment 140.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle wheel
- 11: tire
- 12: rim
- 13: recessed portion
- 14: recess
- 15: screw input side
- 16: inwardly projected segment
- 100: screw
- 110: threaded portion
- 120: head portion
- 121: face of head portion
- 122: shaft segment
- 130: first lock segment
- 131: first lock pattern
- 132: radially extend locking feature
- 140: second lock segment
- 141: second lock pattern
- 142: axially extending locking feature
- 143: third lock pattern
- 150: outer skirt
- 151: outer side
- 152: protruding element
- 200: key
- 210: head portion of key
- 220: shaft portion
- 230: first key segment
- 231: first key pattern
- 232: radially extending key feature
- 233: third key pattern
- 234: axial end
- 240: second key segment
- 241: second key pattern
- 242: axially extending key feature

## Claims

1. A screw (100) for a vehicle wheel (10), wherein the screw (100) comprises a threaded portion (110) to be screwed into a thread of a wheel hub through a recess (14) in the vehicle wheel (10), and a head portion (120) comprising a first lock segment (130) with a first lock pattern (131) and a second lock segment (140) with a second lock pattern (141), wherein the second lock pattern (141) is configured for torque transfer from the head portion (120) to the threaded portion (110) when engaged with a matching second key pattern (241) of a key (200), and wherein the first lock segment (130) at least partially obstructs access to the second lock segment (140) such that the second lock segment (140) cannot be engaged by the key (200) without engagement of the first lock pattern (131) by a matching first key pattern (231) of the key (200).

2. The screw (100) of claim 1, wherein the first lock segment (130) is torque decoupled from the threaded portion (110) such that torque for rotating the threaded portion (110) cannot be transferred from the first lock segment (130) to the threaded portion (110).

3. The screw (100) of claim 2, wherein the first lock segment (130) is configured rotatable with respect to the threaded portion (110).

4. The screw (100) of any one of the previous claims, wherein the first lock segment (130) axially extends in length from a face (121) of the head portion (120) to the second lock segment (140).

5. The screw (100) of any one of the previous claims, wherein the first lock pattern (131) comprises one or more radially extending locking features (132), and the second lock pattern (141) comprises one or more axially extending locking features (142) and/or one or more radially extending locking features.

6. The screw (100) of any one of the previous claims, wherein the head portion (120) comprises an outer skirt (150) surrounding or comprising the first lock segment (130), wherein the outer skirt (150) is configured outwardly deflectable upon engagement of the head portion (120) by a key (200) without a first key pattern (231) matching the first lock pattern (131).

7. The screw (100) of claim 7, wherein the second lock segment (140) comprises an angled surface (143) between the second lock pattern (141) and the outer skirt (150) and/or wherein the outer skirt (150) on an outer side (151) thereof comprises one or more protruding elements (152).

8. A key (200) for a screw (100) for a vehicle wheel (10), wherein the key (200) is configured to engage a head portion (120) of the screw (100), and wherein the key (200) comprises a first key segment (230) with a first key pattern (231) and a second key segment (240) with a second key pattern (241), wherein the second key pattern (241) is configured for torque transfer from the head portion (120) to a threaded portion (110) of the screw (100) when engaged with a matching second lock pattern (141) of the screw (100), and wherein the first key segment (230) at least partially obstructs access to the second key segment (240) such that the second key portion (240) cannot be engaged without engagement of the first key pattern (231) by a matching first lock pattern (131) of the screw (100).

9. The key (200) of claim 8, wherein one of the two key segments (230, 240) is arranged as an insert inside the other one of the two key segments (230, 240).

10. The key (200) of claim 8 or 9, wherein the first key segment (230) is detachable from the second key segment (240).

11. The key (200) of any one of claims 8 to 10, wherein the first key segment (230) comprises a third key pattern (233) at an axial end (234) of the first key segment (230), wherein the third key pattern (232) is configured for engaging with a third lock pattern (143) of the screw (100) for torque transfer from the head portion (110) to the threaded portion (120) of the screw (100).

12. A vehicle wheel (10), wherein the vehicle wheel (10) comprises a recessed portion (13) with a recess (14) for inserting a screw (100) therethrough, wherein the recessed portion (13) comprises an inwardly projected segment (16) arranged at a screw input side (15) of the recessed portion (13), wherein the inwardly projected segment (16) projects inwardly towards the recess (14), and wherein the inwardly projected segment (16) is configured as a limit stop for an outwardly deflected outer skirt (150) of a screw (100) for retaining the screw (100) inside the recess (14).

13. A set comprising at least one screw (100) of any one of claims 1 to 7 and at least one key (200) of any one of claims 8 to 11.

14. A set comprising at least one screw (100) of claim 6 or 7 and the vehicle wheel (10) of claim 12.

15. The set of claim 14, further comprising at least one key (200) of any one of claims 8 to 11.
